# EUROPEAN PATENT SPECIFICATION

(11) **EP 2 614 164 B1**
(45) Date of publication and mention of the grant of the patent: **03.08.2016**
(21) Application number: 10816327.0
(22) Date of filing: 23.12.2010
(51) Int. Cl.: C21B 3/06, C21C 5/52, F27B 3/08

(54) **METHOD AND PLANT FOR TREATING METALLURGICAL SLAG**
VERFAHREN UND ANLAGE ZUR BEHANDLUNG VON METALLURGISCHER SCHLACKE
PROCÉDÉ ET INSTALLATION PERMETTANT DE TRAITER DES SCORIES MÉTALLURGIQUES

(30) Priority: 06.09.2010 IT BS20100149
(43) Date of publication of application: 17.07.2013
(73) Proprietor: Feralpi Siderurgica S.p.a., 25121 Brescia (IT)
(72) Inventor: MAGNI, Francesco, I-25121 Brescia (IT); TOLETTINI, Ercole, I-25121 Brescia (IT); LOCATELLI, Luigi, I-25121 Brescia (IT)
(74) Representative: Tansini, Elio Fabrizio
(86) International application number: PCT/IB2010/056048
(87) International publication number: WO 2012/032379

(56) References cited:
- EP-A1- 1 126 039
- DURINCK D ET AL: "Hot stage processing of metallurgical slags", RESOURCES CONSERVATION AND RECYCLING, ELSEVIER SCIENCE PUBLISHER, AMSTERDAM, NL, vol. 52, no. 10, 1 August 2008 (2008-08-01), pages 1121-1131, XP025405164, ISSN: 0921-3449, DOI: DOI:10.1016/J.RESCONREC.2008.07.001 [retrieved on 2008-08-09]

## Description

The present invention relates to a method for the treatment of metallurgical slag, for example from a steel production plant. The present invention also relates to a plant for the treatment of metallurgical slag configured for the realization of such method.

The process of production of steel by melting scrap metal typically implies the use of an electric arc furnace (EAF). The melting of scrap metal within such furnace leads to separation of the metal phases from the non-metal phases due to the different densities of such phases. Metal phases constitutes a metal bath of molten steel while the mixture of non-metal phases, which are less dense and therefore float on the surface of the metal bath, is called slag. More in detail, the electric furnace slag is typically a ternary mixture of calcium oxide (CaO), silicon dioxide (SiO2) and iron oxides (FeO), to which are added, to a lesser extent, other components, such as compounds of aluminum, chromium, phosphorus, magnesium, manganese, sodium, potassium, sulfur, titanium, barium, vanadium, etc. In the refining process of the steel, the slag is separated from the molten metal through an operation of scorification, which typically consists in the removal of the slag from the electric furnace by a pouring from an appropriate opening of the furnace itself. In such way the molten steel remains in the furnace while the slag is removed and stored in appropriate spaces.

The slag drawn out from the electric furnace typically contains compounds, such as heavy metals (chromium, barium, vanadium, nickel, etc..), which are, if released, damaging to the environment and to human health and therefore forbid subsequent use of the slag itself, for example as building material (filler in construction works, coatings, road beds, etc.). It is known about methods for the treatment of the metallurgical slag from an electric arc furnace. For example, the patent document US2003/0010060 describes a method which provides transferring the slag into a container, removing the foam present in the slag by the addition of an anti-foaming agent, then heating the slag in order to fluidify it and finally cooling down forcedly. Such method aims to "slake" (by hydration) the free lime present in the slag in order to eliminate the phenomena of swelling of the slag itself which forbid thereof the subsequent use as construction material.

The Applicant has found that current methods for treating metallurgical slag are not without drawbacks and can be improved under various aspects.

In particular, the Applicant has observed that known methods are not recognized as capable of making chemically inert the slag coming from electric furnace, or rather capable of eliminating the risks to the environment and health due to the presence of heavy metals.

A further drawback found by the Applicant consists in the high complexity or numerosity of the steps of known methods and/or in the necessity to have complex and/or expensive equipments.

A further drawback of known methods found by the Applicant consists in the high energy consumption (for example in the step of heating and/or forced cooling of the slag) required for the treatment of the slag.

The Applicant has also found as known methods are intended to a particular type of slag from electric furnace having a high content of CaO (typically 45%) and SiO₂ (typically 22%) and a low content of FeO (typically 33%).

The Applicant has also found as known methods are characterized by a high cost of fulfillment and/or a high execution time.

Article by DURINCK D. et al: "Hot stage processing of metallurgical slags", RESOURCES CONSERVATION AND RECYCLING, ELSEVIER SCIENCE PUBLISHER, AMSTERDAM, NL, vol. 52, no. 10, 1 August 2008, pages 1121-1131, XP025405164, ISSN: 0921-3449, discloses the addition of SiO₂ (quartz sand) and oxygen into a BOF slag in order to avoid C₂S precipitation.

EP 1 126 039 A1 discloses a method for processing a liquid slag and baghouse dust byproducts generated by steelmaking to recover valuable metals utilizing an apparatus having a lower shell and an upper shell comprising introducing liquid slag from said furnace to a lower shell portion and introducing sand to said liquid slag.

Under these circumstances, the aim underlying the present invention, in its various aspects and/or embodiments, is to provide a method for treating metallurgical slag which is able to obviate one or more of the drawbacks mentioned above.

This aim and others, if any, that will be more apparent in the following description are substantially achieved by a method, and a relative plant, for treating metallurgical slag according to one or more of the appended claims, each of them being considered alone (without its related dependent claims) or in any combination with other claims, and according to the following aspects and/or embodiments, variously combined, also with the aforesaid claims.

In one aspect, the invention relates to a method for treating metallurgical slag comprising the steps of:
a) extracting the slag produced by an electric furnace by pouring of a continuous flow of slag out of the furnace;
b) simultaneously to step a), mixing evenly with said slag a quantity of sand by controlled pouring of a continuous flow of sand in said continuous flow of slag for creating a resulting continuous flow of treated slag, said sand being in granular form.

In the context of the present invention, the term "sand" generally refers to the silicon-containing minerals such as silicates, quartzite or igneous, sedimentary or metamorphic rocks in general.

The Applicant believes that the combination of the aforesaid technical features, in particular the fact that simultaneously with the step of pouring a continuous flow of slag from the electric furnace takes place a mixing of such slag with a continuous and controlled flow of granular sand, allows to limit the operations necessary for treating the slag and therefore reduce time and costs associated with such treatment. In addition, the method described, unlike known methods, does not require subsequent heating or remelting operations, being the slag removed from the electric furnace molten and therefore already at a high temperature which is able to achieve the proper mixing of the slag itself with the quantity of sand added. In such a way it is possible to reduce energy consumption for the treatment of the slag and the overall costs of production and refining of steel. Furthermore, the method is rational and simple and does not require, for its implementation, complex machinery or equipment downstream of the electric furnace. In fact, the continuous flow of slag is extracted directly from the electric furnace and the continuous flow of sand can be supplied either manually by an operator or in automated way. Then the Applicant believes that the present invention is able to provide a method for the treatment of metallurgical slag which is cost-effective.

The Applicant also noted, to its knowledge for the first time, how granular sand, added and mixed evenly to the starting molten slag, acts as a cross-linking substance, classifiable as glass former, and allows to increase the fraction of silicates formed in treated slag. Such vitrification process leads to the formation of macromolecular compounds (vitreous structures) which "trap" (segregate) the heavy metals contained in the starting slag, such as chromium, barium and vanadium. In this way heavy metals are enclosed permanently in the crystal structure of the treated slag, or rather the treated slag becomes chemically inert and stable and keeps inside the heavy metals, which are not released to the outside, not even in later times. In other words, the method of the present invention allows to modify the composition of the starting slag and to create a resulting continuous flow of treated slag having a specific chemical composition, as will emerge more clearly in the follow up.

The Applicant then thinks that the present invention is able to provide a method for the treatment of the slag which eliminates the risks for environment and health due to the presence of heavy metals in it. In addition, the method allows to transform the slag from electric furnace in a by-product economically exploitable because employable as construction material and at the same time allows to reduce the cost of slag disposal.

In one aspect, in step b) said continuous flow of sand is composed of sand having an average particle size less than 5mm, preferably less than 2mm, more preferably less than 1 mm. In such way it is obtained a homogeneous mixing of the sand with the slag. In other words the sand, introduced into the molten slag extracted from the electric furnace, has a particle size such as to completely melt and dissolve itself directly in the flow of the slag, to realize the aforesaid phenomenon of vitrification and obtain a treated slag with uniform chemical and physical characteristics.

In one aspect, in step b) said continuous flow of sand has a predetermined mass flow rate of sand (i.e. carries a predetermined amount of sand, in mass, per unit of time). The Applicant has in fact verified as the selection of a proper mass flow rate of sand affects the effectiveness of the treatment to produce a treated slag in which heavy metals are completely encompassed in vitreous structures formed during mixing. More in detail, the mass flow rate of granular sand can be selected depending on the characteristics of the sand used and/or on the analysis of the slag extracted from the furnace. Still, the mass flow rate of sand can be selected according to the desired characteristics of the treated slag, for example the percentage of content of SiO₂ or the melting point.

In one aspect, said predetermined mass flow rate of sand is comprised between 5% and 15%, preferably between 8% and 12%, of the mass flow rate of slag extracted in step a).

In one aspect, in step a) the slag contains a percentage of iron oxides comprised between 40 and 60, a percentage of calcium oxide comprised between 30 and 50 and a percentage of silicon oxide comprised between 10 and 20, and after step b) the treated slag contains a percentage of iron oxides comprised between 40 and 60, a percentage of calcium oxide comprised between 15 and 35, and a percentage of silicon oxide comprised between 20 and 30.

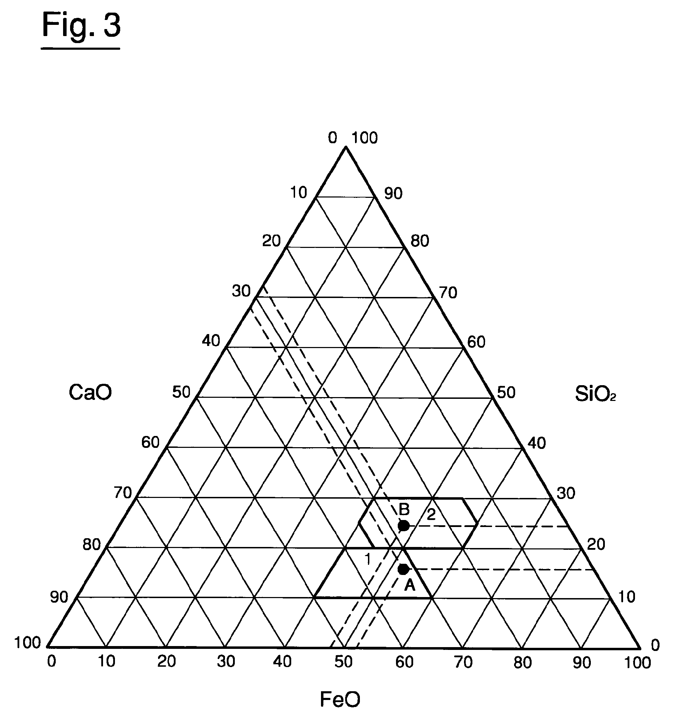

For purely illustrative purposes, it is reported in Figure 3 a ternary diagram FeO-CaO-SiO₂, showing on the three sides the percentages in mass of the three main components which compose a metallurgical slag.

In the diagram are shown, respectively with the number 1 and 2, the areas corresponding to the composition intervals of the starting slag and of the treated slag as from the last aspect above. It ahs to be noted how the application of the method object of the present invention allows to modify the composition of a starting slag which is, in the diagram, inside the area indicated with 1 and obtain a treated slag having a composition contained in the area indicated with 2. Such area 2 of the ternary diagram is optimal to obtain the vitrification of the slag.

The Applicant has verified, through the execution of micrographic analysis of the treated slag, that the method object of the present invention (through the use of a predetermined mass flow rate of sand with a predetermined particle size) allows to encompass heavy metals contained in the starting slag into vitreous structures of the treated slag.

In one aspect, in said step b) said continuous flow of sand penetrates said continuous flow of slag in order to obtain an autonomous mixing of the two flows and to create a resulting continuous flow of treated slag which is uniform. Thus it is not necessary to blend the two flows for obtaining a uniform treated slag and, in addition, the mixing takes place continuously during the pouring of the slag from the electric furnace.

In one aspect, in step a) said continuous flow of slag comes out from an apposite opening of the electric furnace. Thus it is possible to extract the flow of slag directly from the furnace and to pour the slag out of it maintaining the molten metal within it.

In one aspect, in step b) said continuous flow of sand is delivered by a dosing device configured for delivering continuously said predetermined mass flow rate of sand.

In one aspect, the method comprises, after step b), the step c) of collecting the aforesaid resulting continuous flow of treated slag. Preferably said resulting continuous flow of treated slag is collected in a collecting area on the ground. Thus it is not necessary to arrange a container for subsequent steps of treatment, since the treated slag comes to the ground already mixed and can accumulate in the aforesaid collecting area.

In an alternative aspect, in step c) the resulting continuous flow of treated slag is collected in a container (such as a ladle). Thus the fall of the treated slag in the container advantageously allows to obtain an additional mixing of the sand with the slag and thus a better homogenization of the treated slag.

In one aspect, the present invention relates to a plant for treating metallurgical slag comprising:
- an electric furnace, intended to melt metal scrap for the production of steel, provided with a melting chamber and an opening configured for the spillage from it of a continuous flow of slag toward a mixing zone;
- a dosing device configured for delivering in a controlled manner a continuous flow of sand in granular form toward said mixing zone;
- a collecting area of said flow of slag and said flow of sand, mixed one with the other, positioned below said mixing zone.

The Applicant believes that the aforesaid plant is structured for the fulfillment of the method above described, in one or more of its aspects or claims.

In one aspect, the dosing device comprises a storage container for the sand and a delivery device positioned downstream of the storage container and configured for receiving from it the sand and for generating in a controlled manner said continuous flow of sand toward said mixing zone.

In one aspect, the dosing device comprises a chute positioned downstream of said delivery device for receiving said continuous flow of sand and directing it towards said mixing zone.

In one aspect, the delivery device is a feed auger or a rotary valve or a vibrating table or a conveyor belt.

Further characteristics and advantages will be more evident from the detailed description of some exemplary though not exclusive embodiments, among which also a preferred embodiment, of a plant for treating metallurgical slag, and a relative method for treating metallurgical slag, according to the present invention. This description will be disclosed below with reference to the accompanying drawings, provided to a merely indicative and therefore non-limiting purpose, in which:
- Figure 1 is a schematic side view of a possible embodiment of a plant for treating metallurgical slag, according to the present invention, which realizes a method for treating metallurgical slag according to the present invention;
- Figure 2 is a schematic side view of a further possible embodiment of a plant for treating metallurgical slag according to the present invention;
- Figure 3 is a ternary diagram FeO-CaO-SiO₂ of a metallurgical slag.

With reference to the accompanying figures, a plant for treating metallurgical slag according to the present invention is globally referred to with the numeral 1.

The plant 1 comprises a mixing zone 10, an electric furnace 2 provided with a melting chamber 3 and an opening 4 from which comes out a continuous flow of slag 5 toward the mixing zone, a dosing device 20 which deliver in a controlled manner a continuous flow of sand 6 toward the mixing zone, and a collecting area 11 of the flow of slag and the flow of sand, mixed one with the other, positioned below the mixing zone.

Preferably, the electric furnace is a direct or alternating current, or resistance, electric arc furnace.

Preferably, the dosing device 20 comprises a storage container 21 for the sand and a delivery device 30, positioned downstream of the storage container, which receives from it the sand and generates in a controlled manner the aforesaid continuous flow of sand directed toward the mixing zone. Preferably, the dosing device 20 comprises a chute 22 positioned downstream of the delivery device 30 for receiving from it the continuous flow of sand and directing it towards the mixing zone.

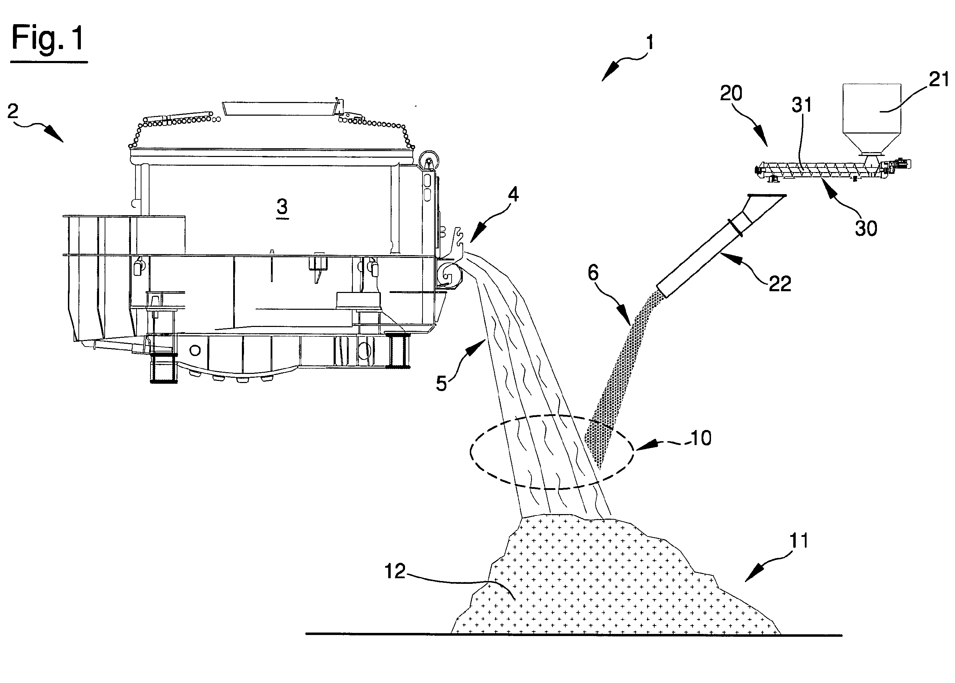

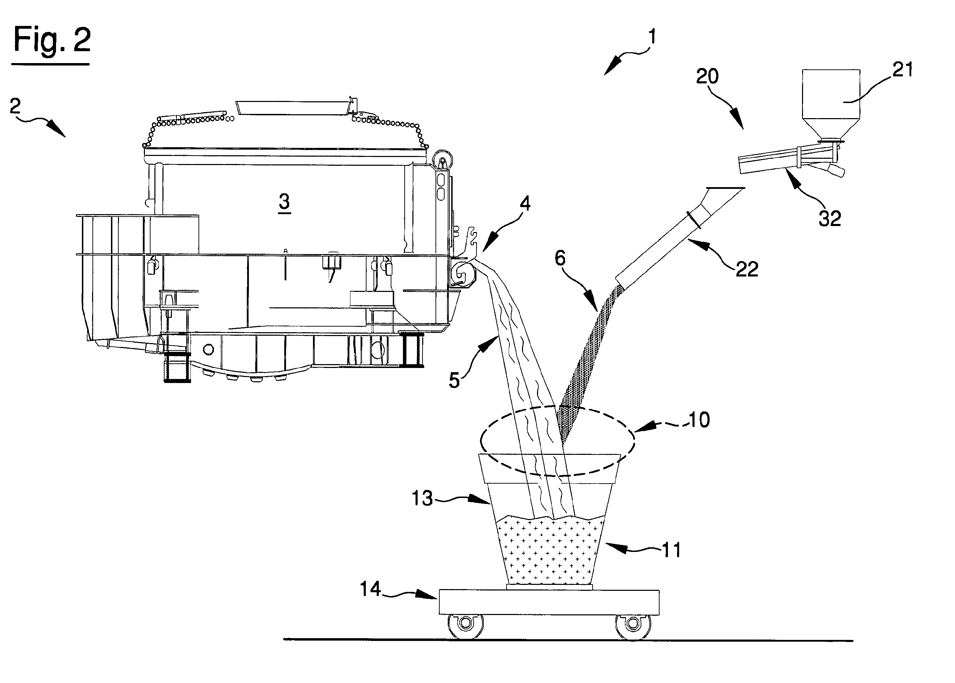

Preferably, the delivery device is a feed auger 31, as exemplary shown in Figure 1, or a vibrating table 32, as exemplary shown in Figure 2. Alternatively, the delivery device can be a rotary valve or a conveyor belt.

Preferably the storage container 21 is a hopper or a bag or a silo.

Preferably, as in the exemplary embodiment of Figure 1, the collecting area 11 is a free portion of the plant floor where the flow of slag 5 and sand 6, mixed with each other, accumulate, for example to form a pile 12. Alternatively, as in the exemplary embodiment of Figure 2, the plant comprises a container 13 which defines the aforesaid collecting area 11.

Exemplary, the container is a ladle preferably positioned on a trolley 14 which enables thereof the movement.

Preferably the plant comprises an electronic control unit, not shown and for example of known type, programmed for managing the operation of the plant. Preferably the control unit is connected to the furnace and programmed for controlling the temperature of the melting chamber 3 and/or for managing the opening and the closing of the opening 4 for the spillage of the continuous flow of slag.

Preferably the electronic control unit is connected to the dosing device 20 and programmed for allowing a continuous adjustment of the mass flow rate (i.e. the amount of sand, in mass, per unit of time) delivered by the dosing device.

Preferably the control unit is connected to the delivery device 30 and programmed for adjusting, for example, the speed of rotation of the auger 31 or the frequency of vibration of the vibrating table 32.

The operation of the plant 1, which realizes the method for treating metallurgical slag above described, involves to extract the slag produced by the electric furnace 2, by pouring of the continuous flow of slag 5 out of the electric furnace, and simultaneously to mix evenly with the slag a quantity of sand by controlled pouring of the continuous flow of sand 6 in the continuous flow of slag 5 for creating a resulting continuous flow of treated slag, which is collected.

Exemplary, the continuous flow of sand 6 is composed of sand having an average particle size less than 1mm.

Preferably, the particle size is selected according to the type of slag removed from the furnace (which in turn depends on the composition of the scrap metal brought in the electric furnace) and/or depending on the desired characteristics of the treated slag. Preferably, the continuous flow of sand 6 has a predetermined mass flow rate of sand (i.e. carries a predetermined amount of sand, in mass, per unit of time).

Preferably said predetermined mass flow rate of sand is comprised between 5% and 15%, more preferably between 8% and 12%, of the mass flow rate of slag extracted in step a). Exemplary, the predetermined mass flow rate of sand is equal to about 10% of the mass flow rate of slag extracted from the electric furnace.

Preferably, the slag 5 contains a percentage of iron oxides comprised between 40 and 60, a percentage of calcium oxide comprised between 30 and 50 and a percentage of silicon oxide comprised between 10 and 20, and the treated slag contains a percentage of iron oxides comprised between 40 and 60, a percentage of calcium oxide comprised between 15 and 35 and a percentage of silicon oxide comprised between 20 and 30.

Exemplary, the slag 5 has a typical composition of about 52% of iron oxides, 32% of calcium oxide and 16% of silicon oxide and the treated slag has a typical composition of about 48% of iron oxides, 28% of calcium oxide and 24% of silicon oxide. In the ternary diagram of Figure 3 are indicated, respectively with A and B, the aforesaid exemplary typical compositions of the starting slag and the treated slag.

## Claims

1. A method for treating metallurgical slag in order to segregate heavy metals in the slag by including them permanently in a crystal structure of the treated slag, the method comprising the steps of:
a) extracting the slag produced by an electric furnace by pouring of a continuous flow of slag out of the furnace;
b) simultaneously to step a), mixing evenly with said slag a quantity of sand by controlled pouring of a continuous flow of sand in said continuous flow of slag for creating a resulting continuous flow of treated slag, said sand being in granular form.

2. The method according to claim 1 where in step b) said continuous flow of sand is composed of sand having an average particle size less than 5mm, preferably less than 2mm, more preferably less than 1mm.

3. The method according to claim 1 or 2 where in step b) said continuous flow of sand has a predetermined mass flow rate of sand comprised between 5% and 15%, preferably between 8% and 12%, of the mass flow rate of slag extracted in step a).

4. The method according to any one of the preceding claims, where in step a) the slag contains a percentage of iron oxides comprised between 40 and 60, a percentage of calcium oxide comprised between 30 and 50 and a percentage of silicon oxide comprised between 10 and 20, and after step b) the treated slag contains a percentage of iron oxides comprised between 40 and 60, a percentage of calcium oxide comprised between 15 and 35, and a percentage of silicon oxide comprised between 20 and 30.

5. The method according to any one of the preceding claims, where in step b) said continuous flow of sand is delivered by a dosing device configured for delivering continuously said predetermined mass flow rate of sand.

6. The method according to any one of the preceding claims comprising, after step b), the step c) of collecting the aforesaid resulting continuous flow of treated slag in a container.

7. A plant (1) for treating metallurgical slag in order to segregate heavy metals in the slag by including them permanently in a crystal structure of the treated slag, the plant comprising:
- an electric furnace (2), intended to melt metal scrap for the production of steel, provided with a melting chamber (3) and an opening (4) configured for the spillage from it of a continuous flow of slag (5) toward a mixing zone (10);
- a dosing device (20) configured for delivering in a controlled manner a continuous flow of sand (6) in granular form toward said mixing zone;
- a collecting area (11) of said flow of slag and said flow of sand, mixed one with the other, positioned below said mixing zone.

8. The plant (1) according to claim 7 wherein said dosing device (20) comprises a storage container (21) for the sand and a delivery device (30) positioned downstream of the storage container and configured for receiving from it the sand and for generating in a controlled manner said continuous flow of sand toward said mixing zone (10).

9. The plant (1) according to claim 7 or 8 wherein said delivery device (30) is a feed auger (31) or a rotary valve or a vibrating table (32) or a conveyor belt.

10. The plant (1) according to any one of claims 7 to 9, comprising an electronic control unit programmed for managing the operation of the plant.

## Patentansprüche

1. Verfahren zur Behandlung von metallurgischer Schlacke zur Abscheidung von Schwermetallen in der Schlacke durch ihr permanentes Einschließen in eine Kristallstruktur der behandelten Schlacke, wobei das Verfahren die folgenden Schritte umfasst:
a) Extrahieren der durch einen Elektroofen produzierten Schlacke durch Gießen eines kontinuierlichen Flusses von Schlacke aus dem Ofen;
b) simultan zu Schritt a) gleichmäßiges Vermischen mit der Schlacke einer Menge von Sand durch kontrolliertes Gießen eines kontinuierlichen Flusses von Sand in den kontinuierlichen Fluss von Schlacke zur Bildung eines resultierenden kontinuierlichen Flusses von behandelter Schlacke, wobei der Sand in körniger Form vorliegt.

2. Verfahren nach Anspruch 1, wobei in Schritt b) der kontinuierliche Fluss von Sand aus Sand besteht, der eine durchschnittliche Korngröße von weniger als 5 mm, vorzugsweise weniger als 2 mm, weiter bevorzugt weniger als 1 mm, aufweist.

3. Verfahren nach Anspruch 1 oder 2, wobei in Schritt b) der kontinuierliche Fluss von Sand einen zuvor bestimmten Mengendurchsatz von Sand aufweist, der zwischen 5 % und 15 %, vorzugsweise zwischen 8 % und 12 %, des Mengendurchsatzes von in Schritt a) extrahierter Schlacke umfasst ist.

4. Verfahren nach einem der vorangehenden Ansprüche, wobei in Schritt a) die Schlacke einen Prozentsatz von Eisenoxiden enthält, der zwischen 40 und 60 umfasst ist, einen Prozentsatz von Calciumoxid, der zwischen 30 und 50 umfasst ist und einen Prozentsatz von Siliziumoxid, der zwischen 10 und 20 umfasst ist, und nach Schritt b) die behandelte Schlacke einen Prozentsatz von Eisenoxiden enthält, der zwischen 40 und 60 umfasst ist, einen Prozentsatz von Calciumoxid, der zwischen 15 und 35 umfasst ist und einen Prozentsatz von Siliziumoxid, der zwischen 20 und 30 umfasst ist.

5. Verfahren nach einem der vorangehenden Ansprüche, wobei in Schritt b) der kontinuierliche Fluss von Sand durch eine Dosiervorrichtung geliefert wird, die zur kontinuierlichen Lieferung des zuvor bestimmten Mengendurchsatzes von Sand konfiguriert ist.

6. Verfahren nach einem der vorangehenden Ansprüche, umfassend nach Schritt b) den Schritt c) des Sammelns des zuvor genannten resultierenden kontinuierlichen Flusses von behandelter Schlacke in einem Behälter.

7. Anlage (1) zur Behandlung von metallurgischer Schlacke zur Abscheidung von Schwermetallen in der Schlacke durch ihr permanentes Einschließen in eine Kristallstruktur der behandelten Schlacke, wobei die Anlage Folgendes umfasst:
- einen Elektroofen (2), der zum Schmelzen von Metallabfällen zur Produktion von Stahl vorgesehen ist, der mit einer Schmelzkammer (3) und einer Öffnung (4) bereitgestellt ist, die zum Austritt eines kontinuierlichen Flusses von Schlacke (5) daraus zu einer Mischzone (10) konfiguriert ist;
- eine Dosiervorrichtung (20), die zur kontrollierten Lieferung eines kontinuierlichen Flusses von Sand (6) in körniger Form zur Mischzone konfiguriert ist;
- einen Sammelbereich (11) des Flusses von Schlacke und des Flusses von Sand, die miteinander vermischt sind, der unter der Mischzone positioniert ist.

8. Anlage (1) nach Anspruch 7, wobei die Dosiervorrichtung (20) einen Lagerungsbehälter (21) für den Sand und eine Liefervorrichtung (30) umfasst, die dem Lagerungsbehälter nachgelagert positioniert ist und zum Empfang von diesem des Sandes und zur kontrollierten Erzeugung des kontinuierlichen Flusses von Sand zur Mischzone (10) hin konfiguriert ist.

9. Anlage (1) nach Anspruch 7 oder 8, wobei die Liefervorrichtung (30) eine Förderschnecke (31) oder ein Drehschieber oder ein Rütteltisch (32) oder ein Förderband ist.

10. Anlage (1) nach einem der Ansprüche 7 bis 9, umfassend eine elektronische Steuereinheit, die zur Verwaltung des Betriebs der Anlage programmiert ist.

## Revendications

1. Procédé de traitement de scories métallurgiques afin d'isoler des métaux lourds dans les scories en les incluant de façon permanente dans une structure à cristaux des scories traitées, le procédé comprenant les étapes de :
a) extraire les scories produites par un fourneau électrique en versant un flux continu de scories hors du fourneau ;
b) simultanément à l'étape a), mélanger uniformément auxdites scories une quantité de sable par un versement contrôlé d'un flux continu de sable dans ledit flux continu de scories pour créer un résultant flux continu de scories traitées, ledit sable ayant une forme granulaire.

2. Procédé selon la revendication 1 où, à l'étape b), ledit flux continu de sable est composé de sable ayant une dimension de grain moyenne inférieure à 5 mm, de préférence inférieure à 2 mm, ou mieux encore inférieure à 1 mm.

3. Procédé selon les revendications 1 ou 2 où, à l'étape b), ledit flux continu de sable possède un débit massique prédéterminé de sable compris entre 5 et 15 %, de préférence entre 8 et 12 % du débit massique des scories extraites à l'étape a).

4. Procédé selon l'une quelconque des revendications précédentes où, à l'étape a), les scories contiennent un pourcentage d'oxyde de fer compris entre 40 et 60, un pourcentage d'oxyde de calcium compris entre 30 et 50 et un pourcentage d'oxyde de silice compris entre 10 et 20, et après l'étape b) les scories traitées contiennent un pourcentage d'oxyde de fer compris entre 40 et 60, un pourcentage d'oxyde de calcium compris entre 15 et 35 et un pourcentage d'oxyde de silice compris entre 20 et 30.

5. Procédé selon l'une quelconque des revendications précédentes où, à l'étape b), ledit flux continu de sable est alimenté par un dispositif doseur configuré pour alimenter de façon continue ledit débit massique prédéfini de sable.

6. Procédé selon l'une quelconque des revendications précédentes comprenant, après l'étape b), l'étape c) consistant à collecter le flux continu de scories traitées obtenues dans un conteneur.

7. Installation (1) de traitement de scories métallurgiques afin d'isoler des métaux lourds dans les scories en les incluant de façon permanente dans une structure à cristaux des scories traitées, l'installation comprenant :
- un fourneau électrique (2), prévu pour fondre des fragments de métal pour la production d'acier, pourvu d'une chambre de fusion (3) et d'une ouverture (4) configurée pour le déversement de celle-ci d'un flux continu de scories (5) vers une zone de mélange (10) ;
- un dispositif doseur (20) configuré pour alimenter d'une manière contrôlée un flux continu de sable (6) sous forme granulaire vers ladite zone de mélange ;
- une zone de collecte (11) dudit flux de scories et dudit flux de sable mélangés l'un à l'autre, positionnée en dessous de ladite zone de mélange.

8. Installation (1) selon la revendication 7, dans laquelle ledit dispositif doseur (20) comporte un conteneur de stockage (21) pour le sable et un dispositif d'alimentation (30) positionné en aval du conteneur de stockage et configuré pour recevoir de celui-ci le sable et pour générer d'une façon contrôlée ledit flux continu de sable vers ladite zone de mélange (10).

9. Installation (1) selon les revendications 7 ou 8, dans laquelle ledit dispositif d'alimentation (30) est une vis d'alimentation (31) ou une vanne d'alimentation rotative ou une table vibrante (32) ou une bande transporteuse.

10. Installation (1) selon l'une quelconque des revendications de 7 à 9, comprenant une unité de commande électronique programmée pour gérer le fonctionnement de l'installation.
